# EUROPEAN PATENT SPECIFICATION

(11) **EP 0 652 508 B1**
(45) Date of publication and mention of the grant of the patent: **04.11.1998**
(21) Application number: 95100900.0
(22) Date of filing: 11.02.1986
(51) Int. Cl.: G06F 9/30

(54) **Microprocessor with block move instruction**
Mikroprozessor mit einer Blockübertragungsinstruktion
Microprocesseur avec une instruction de transfert de bloc

(30) Priority: 12.02.1985 US 701824; 12.02.1985 US 701825; 12.02.1985 US 701826; 12.02.1985 US 701827; 12.02.1985 US 701828; 12.02.1985 US 701829
(43) Date of publication of application: 10.05.1995
(62) Divisional of application: 86300930.4
(73) Proprietor: TEXAS INSTRUMENTS INCORPORATED, Dallas Texas 75265 (US)
(72) Inventor: Magar, Surendar S., c/o Honeywell Inc., Colorado Springs, CO 80906 (US); Essig, Daniel L., Houston, TX 77036 (US); Simpson, Richard D., Houston, TX 77036 (US); Caudel, Edward R. (deceased), (US)
(74) Representative: Abbott, David John

(56) References cited:
- EP-A- 0 073 419
- US-A- 3 665 402
- US-A- 4 159 520
- US-A- 4 379 328
- IBM TECHNICAL DISCLOSURE BULLETIN, vol. 19,no. 1, June 1976 NEW YORK, US, pages 67-70, DVORAK ET AL. 'Hardware Assist for Microcode Execution of Storage to Storage Move Instructions. '

## Description

The invention relates to microcomputer devices, and especially to the moving of blocks of data within a memory space of such a device.

It is the principal object to this invention to provide improved features of a microcomputer device and system, particularly one adapted for real-time digital signal processing or the like. Another object is to provide a high-speeed microcomputer of enhanced capabilities.

The invention provides a microcomputer device responsive to instruction words selected from an instruction set and stored within an addressable memory space, said device being formed in a single integrated circuit and having data input and output terminals and address output terminals, the device comprising within said integrated circuit: an arithmetic logic unit having a data input and a data output, a control circuit responsive to said stored instruction words having outputs connected to said arithmetic logic unit, the control circuit generating micro-control signals on said output to cause said arithmetic logic unit to execute instructions represented by the instruction words, a read/write data memory forming part of said memory space and having an address input and data input and output, a program memory forming part of said memory space and having an address input and at least a program output, and internal data and address buses interconnecting said arithmetic logic unit, said control circuit and said memories and coupled to said data input and output terminals and said address output terminals, characterised in that said instruction set includes a move instruction word, and said control circuit includes a repeat counter and is arranged such that the move instruction is executed by said control circuit a number of times defined by the number stored in said repeat counter which is decremented with each execution of the move instruction, whereby said move instruction word causes the transfer of a block of data in locations starting at a first address of said memory space to locations starting at a second address of said memory space, the number of items of data in said block being defined by the number stored in said repeat counter.

In accordance with one embodiment, features of the invention are included in a system for real-time digital signal processing which employs a single-chip microcomputer device having separate on-chip program ROM and data RAM, with separate address and data paths for program and data. An external program address bus allows off-chip program fetch in an expansion mode, with the opcode returned by an external data bus. A bus interchange module allows transfer between the separate internal program and data busses in special circumstances. The internal busses are 16-bit, while the ALU and accumulator are 32-bit. A multiplier circuit produces a single state 16x16 multiply function separate from the ALU, with 32-bit output to the ALU. One input to the ALU passes through a 0-to-15 bit shifter with sign extension.

In another embodiment, a processor chip is constructed as above, but with no on-chip program ROM. Instead, another on-chip RAM is included, and this additional RAM may be configured as either program or data memory. Thus, the processor may operate with all off-chip program memory and a large on-chip data memory, or with program execution from on-chip RAM (downloaded from off-chip program memory).

The invention, as well as other features and advantages thereof, will be best understood by reference to the detailed description which follows, read in conjunction with the accompanying drawings, wherein;
Figure 1 is an electrical diagram in block form of a microcomputer system employing features of the invention;
Figure 2 is an electrical diagram in block form of an MOS/LSI microcomputer device (including a CPU or central processor unit) employed in the system of Fig. 1 and utilizing features of the invention;
Figure 3 is an electrical diagram in block form of microcomputer device, similar to Fig. 2, but including features of another embodiment of the invention;
Figures 4a and 4b are memory maps of the logical address spaces for the devices of Fig. 2 and Fig. 3, respectively;

### DETAILED DESCRIPTION OF SPECIFIC EMBODIMENT:

### MICROPROCESSOR SYSTEM

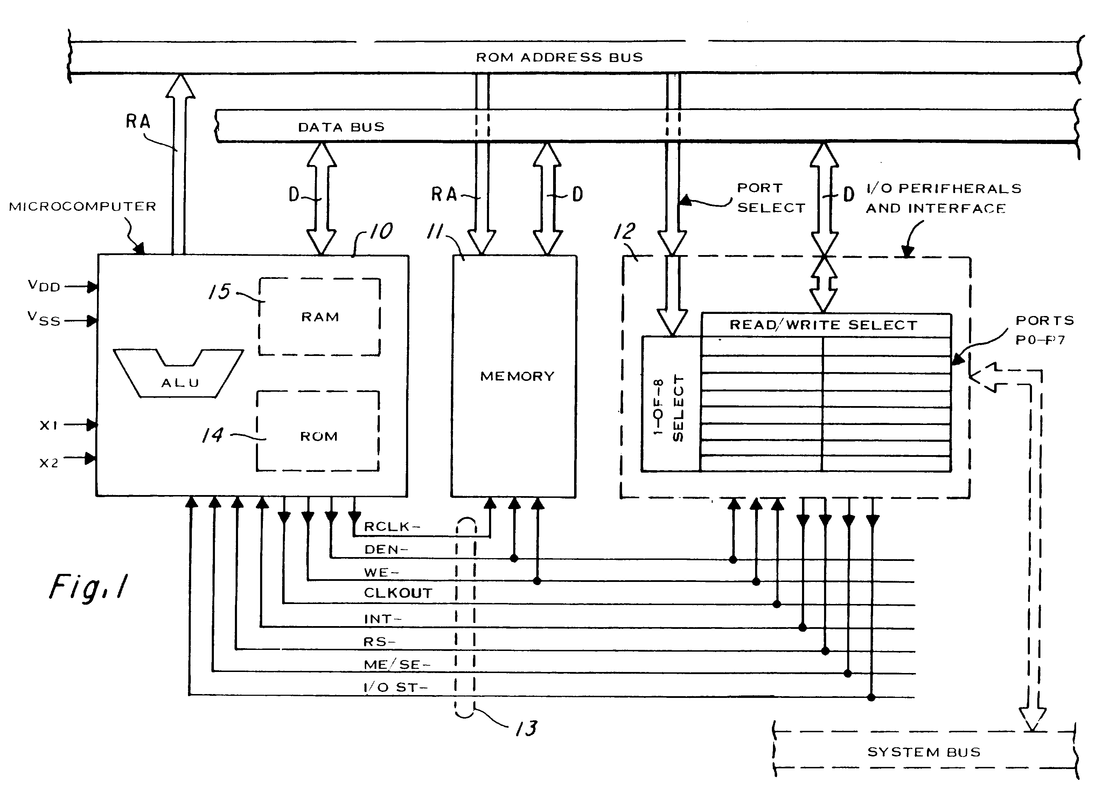

The microcomputer device to be described herein is primarily used for signal processing, but concepts thereof may be used in processor devices of various configurations, and these devices may be used in many different systems; in one embodiment the microcomputer is used in a system shown in generallized form in Figure 1. The system may be, for example, a voice communication system, a speech analysis system, a small "personal" or "home" computer, a single-board general purpose microcomputer, a word processing system, a computer terminal having local processing capability with display and typewriter keyboard, or any one of many applications of various types. The system includes a single-chip MOS/LSI central processing unit or microcomputer 10 which will be described in detail, along with a program or data memory 11 and input/output or I/O devices 12. Usually the I/O devices 12 for the typical system include analog-to-digital and/or digital-to-analog converters, a modem, a keyboard, a CRT display, a disc drive, etc. Often the I/O 12 includes coupling to a general purpose processor; that is, the microcomputer 10 is an attached processor in a larger system with interface via the I/O 12. The microcomputer 10, program or data memory 11 and I/O 12 communicate with one another by two multibit, parallel address and data busses, D and RA, along with a control bus 13.

In general terms, the system of Figure 1 functions in the following manner: the microcomputer 10 fetches an instruction word internally by accessing the ROM 14 or externally by sending out an address on the ROM address bus RA to the memory 11 (and RCLK- on control bus 13). If external, the instruction word is received back via the data bus D from the addressed location in the memory 11. This instruction is executed in the next machine cycle (of length of 200 ns defined by a 20 MHz clock or crystal X1, X2) while a new instruction is being fetched; execution of an instruction may include accessing the on-chip RAM 15 for an operand, or writing a result into data RAM 15, and an arithmetic or logic operation in ALU.

In the example to be described in detail, a 12-bit instruction address applied internally to ROM 14 or externally to the RA bus directly addresses 2¹² or 4K words of program instruction or constants in ROM 14 and memory 11. When reading from memory 11, a DEN- (data bus enable bar) command is asserted on control bus 13. It is also possible to write into the memory 11, and for this purpose a WE- (write enable bar) command is asserted by the device 10 on one of the control bus lines 13; the memory 11 may contain read/write memory devices in some or all of the address space, so the WE- command permits a write function.

The I/O devices 12 are addressed as ports; this interface to external devices 12 is accomplished using the address and data busses RA and D and control bus 13, but the I/O devices 12 do not occupy locations in the logical address space like the memory 11. This is in contrast to conventional memory-mapped I/O.

Data input/output via I/O or peripherals 12 employs a 3-bit field RAp from the bus RA to select one of eight 16-bit ports P0-P7in peripheral circuitry 12. Each port can be defined as either input or output by DEN- or WE-, so in effect these are sixteen 16-bit parts, eight in and eight out. The selected 16-bit port is addressed by RAp and DEN- or WE-, then accessed for read or write via the bus D. This operation uses one of the two instructions IN or OUT; on the control bus 13, WE is active for write or OUT, or DEN- is active for read or IN. A ROM clock RCLKis active on control bus 13 on every machine cycle except when either DEN- or WE- is active; that is, the memory 11 is activated by RCLK- for possible instruction word access from off-chip in each machine cycle, but if accessing peripheral 12 using DEN- or WEthen the RCLK- does not occur.

### THE MICROCOMPUTER CHIP

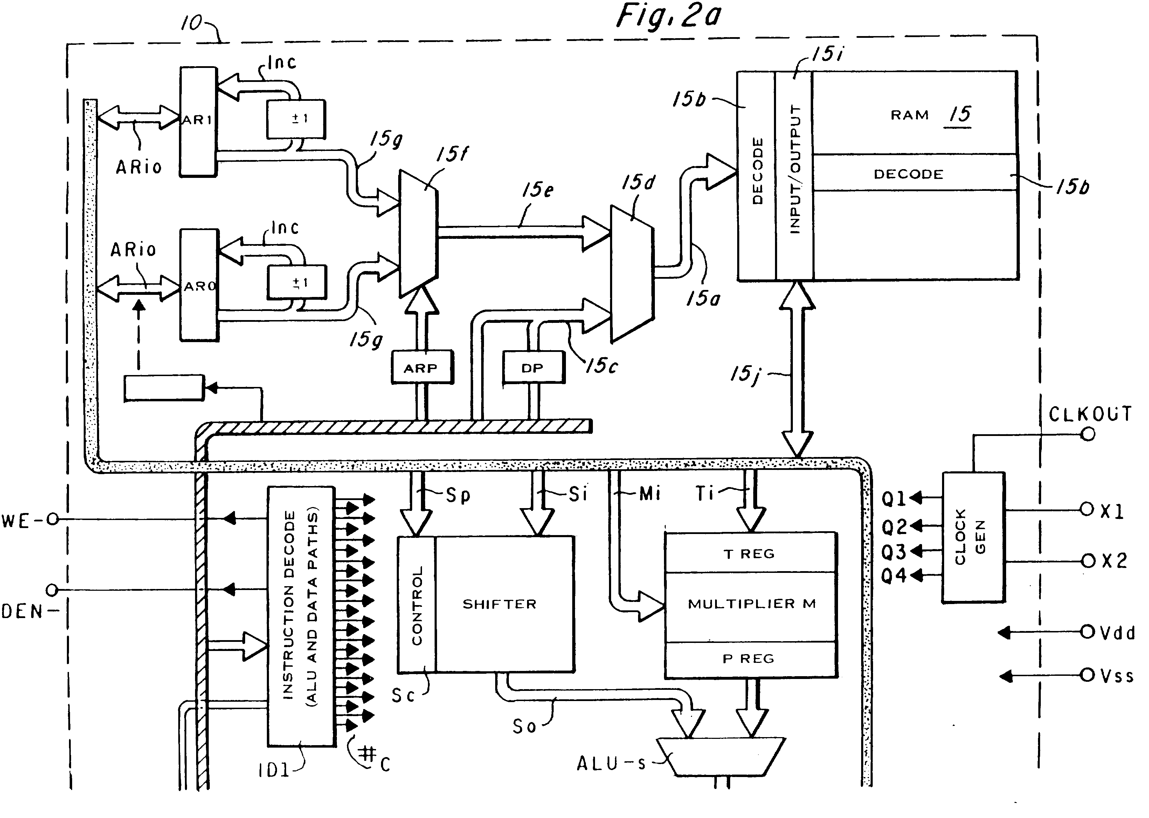

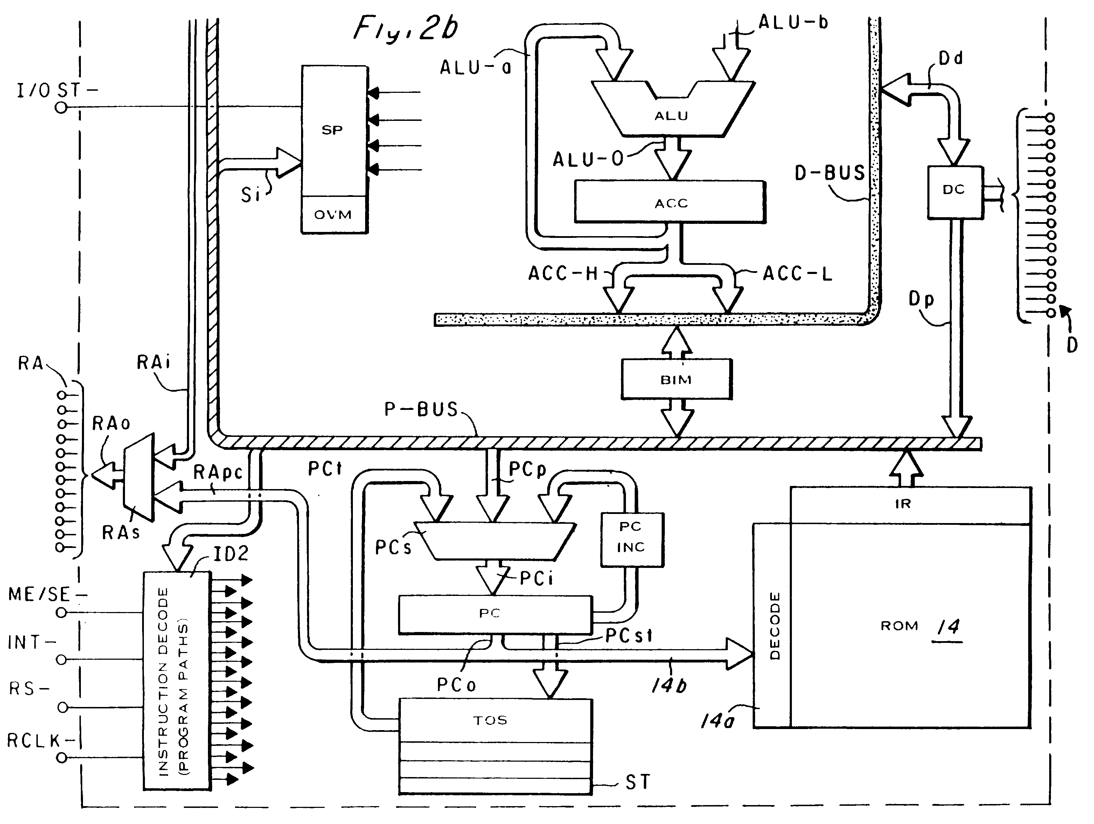

The internal architecture of the microcomputer 10 is shown in a detailed block diagram in Figure 2. This device is a single-chip semiconductor integrated circuit mounted in a standard 40-pin dual-in-line package or a chip carrier. Sixteeen pins or terminals of the package are needed for the 16-bit data bus D, twelve are used for the address bus RA and the remaining terminals are used for the power supply Vdd and Vss, the crystal X1, X2, and the control bus 13.

In addition to the program and data memory 14 and 15, the microcomputer 10 contains a central processing unit or CPU for the system of Figure 1, and this CPU includes a 32-bit arithmetic/logic unit or ALU, a 32-bit accumulator Acc to hold operands and results, multiplier M separate from the ALU, a shifter S which is one input to the ALU, status or flag decode SD, and an instruciton decoder ID1 which receives the current instruction word and generates the control bits for the CPU and data memory portions of the device 10.

The program memory 14 has associated with it a program counter PC to hold the instruction address used to access the ROM 14 or sent out on bus RA to the memory 11, an instruction register IR to receive the instruction word from ROM 14, a stack ST to save program memory addresses, and an instruction decoder ID2 which receives the current instruction word and generates control bits for the program memory portion of the microcomputer. The instruction decoders IDj and ID2 of course may be combined into one larger control ROM, or indeed split inot smaller PLAs or random logic.

Associated with the data memory 15 are two auxiliary address registers ARO and AR1 for the data memory 15, a page register ARP to select between the registers ARO and AR1 for use as the data memory address, and a data page buffer DP to hold certain bits of the data memory address.

The CPU is oriented around two internal busses, a 16-bit program bus (P-Bus) and a 16-bit data bus (D-Bus). Program access and data access can thus occur simultaneously, and the address spaces are separate. The microcomputer is thus of the Harvard architecture, although a bus interchange module BIM permits loading the program counter PC from Acc, for example, or accessing ROM 14 for constants via P-Bus, BIM and D-Bus.

The two major requirements for a signal processing microcomputer are high speed arithmetic and flexibility. Performance is achieved by using separate, principally on-chip program and data memories 14 and 15, a large single accumulator Acc and a parallel multiplier M. A special purpose operation, data move, is defined within the data memory 15 which further enhances the performance in convolution operations. Flexibility has been achieved by defining an instruction set as will be described with reference to Table A, incorporating memory expansion and a single level of interrupt.

The device can be configured with, for example, less than 2K or 2¹¹ words of on-chip program memory 14 yet the architecture allows for memory expansion up to 4K or 2¹² words by the addition of external program memory in the memory 11. In addtion, a separate mode allows the device 10 to be configured as a system emulation device; in this "system emulator" mode, the entire 4K memory space is external and the ROM 14 is not used.

### MEMORY MAPS

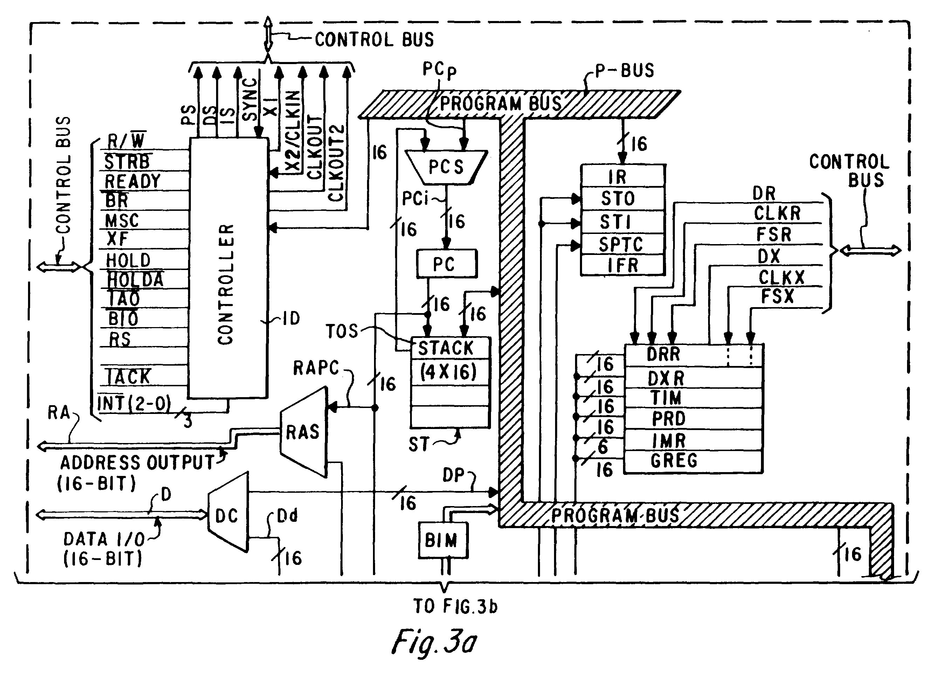

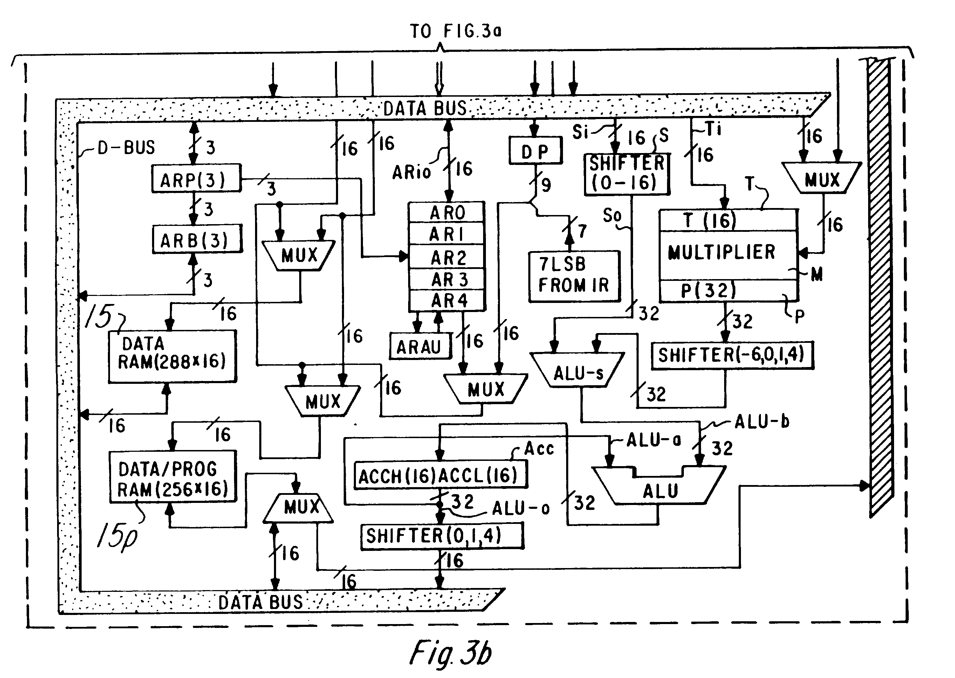

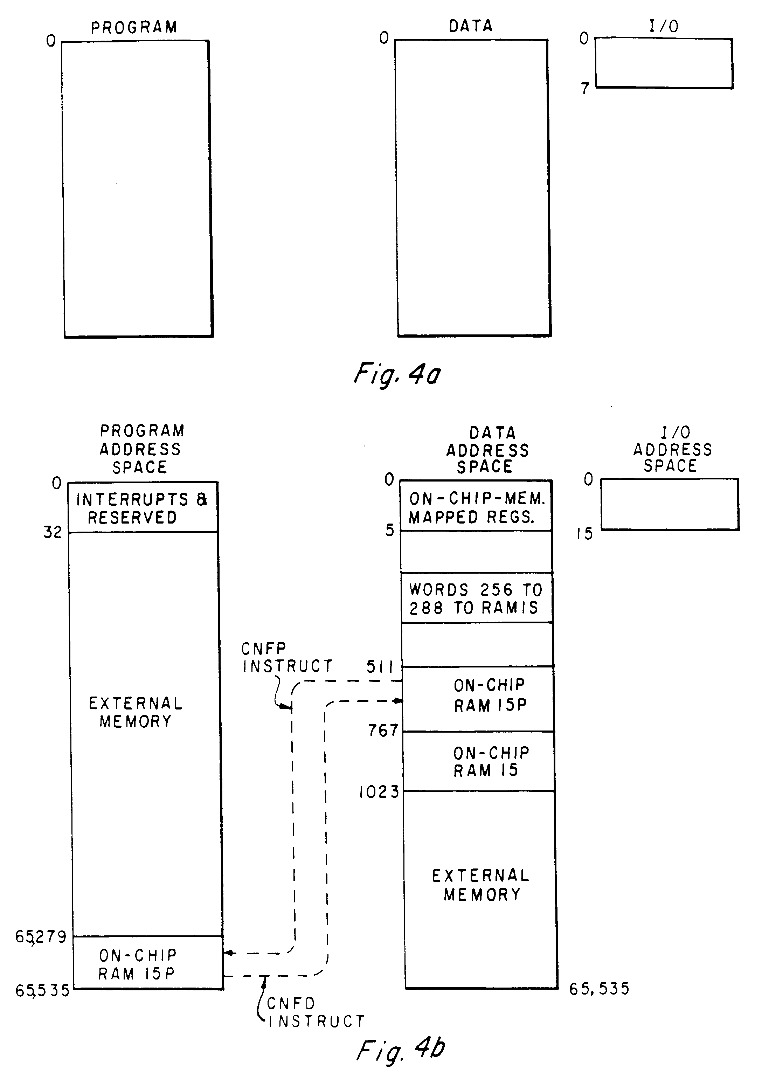

A memory map of the embodiment of Figures 1 and 2 is shown in Fig. 4a. and a memory map of the embodiment of Fig. 3 is shown in Fig. 4b. Since the processor 10 of Fig. 2 has a 12-bit address bus RA, the program memory space is 4K or 4096 words; the ROM 14 is located in less than 2K of this space. Likewise, an address range 4K of data memory is allowed, in which the 288 words of the RAM 15 are located. The I/O address space is 8 words defined by a 3-bit address on lines RAI of Fig. 2. In a similar manner, the device of Fig. 3, has three separate address spaces for program memory, data memory, and I/O, as shown in Fig. 4b. These spaces are distinguished externally by means of the program strobe, data strobe and I/O strobe signals on the control bus 13. The on-chip memory blocks are comprised of a total of 544 words made up of RAM 15 and RAM 15P. The program/data RAM block (256 words) resides In pages 4 and 5 of the data memory map when configured as data RAM, and in pages 510 and 511 when configured as program RAM. The block comprised of RAM 15 (always data RAM) resides in pages 6 and 7, and in the upper 32 words of page 0. Note that the remainder of the data memory map is composed of certain memory-mapped registers and reserved locations. Reserved locations may not be used for storage, and their contents are undefined when read.

The configure CNFD and CNFP instructions are used to configure the RAM 15P as either data or program memory. A BLKP instruction (block move from program memory to data memory) may be used to download program information to RAM 15P when it is configured as data RAM, and then a CNFP (configure block as program memory) instruction may be used to convert it to program RAM. Note that the first instruction fetch after a CNFD or CNFP instruction is taken from the previous memory configuration. Also note that a reset configures the RAM 15P as data RAM.

The processor of Fig. 3 has six registers that are mapped into the data memory space at address locations 0 to 5. These are the registers labeled DRR, DXR, TIM, PRD, IMR and GREG. The DRR register is a 16-bit serial port data transmit register. The TIM register is a 16-bit timer register, while PRD is a 16-bit period register used in timing functions. An interrupt mask register IMR contains a 6-bit interrupt mask. The GREG location is on 8-bit global memory allocation register. These registers may be accessed in the same manner as any other data memory locotion, except that block moves using BLKD are not allowed from these memory-mapped locations.

The processor provides instructions for data and program block moves and data move functions that efficiently utilize the configurable on-chip RAM 15P. The BLKD instruction moves a block within the data memory spaces, and the BLKP instruction moves a block from program memory space to data memory space. These instructions perform block moves from on- or off-chip memory.

The data move instruction DMOV is useful for implementing algorithms that use the socalled z delay operation, such as convolutions and digital filtering where data is being passed through a time window. The data move function is continuous across the boundary of the on-chip data memory blocks, but it cannot be used if off-chip data memory is referenced. Implemented in on-chip RAM 15 or 15P, the DMOV function is equivalent to that of the device of Fig. 2. DMOV allows a word to be copied from the currently addressed data memory location in on-chip RAM to the next higher location while the data from the addressed location is being operated upon in the same cycle (e.g., by the ALU). An operation in the auxiliary arithmetic unit ARU may also be performed in the same cycle when using the indirect addressing mode. The MACD (multiply and accumulate with data move) and the LTD (load T register, accumulate previous product, and move data) instructions can also use the data move function.

### Program Counter and Stack

The processor of Fig. 3 contains a 16-bit program counter PC and a four-location hardware stack ST for storage of the contents of PC. The program counter PC addresses (via P-bus) the internal and external program memory in fetching instructions. The stock PC is used during interrupts, calls, returns, and some special-purpose instructions, such as BLKP/BLKD (block move from program/data memory to data memory) and TBLR/TBLW (table read/write), for transferring data between the program and data memory spaces. The program counter PC addresses program memory, either on-chip or off-chip, via the program address bus P-bus, by which an instruction is fetched from program memory and put in the instruction register. When the IR is loaded, the program counter PC is ready to start the next instruction fetch cycle. The PC address on-chip RAM 15P when it is configured as program memory, or it addresses off-chip program memory through the 16-bit address bus RA and the external data bus D. The program counter also address data memory during a BLKD instruction, which moves data blocks from one section of data memory to another. The contents of the accumulator Acc may be loaded into the program counter PC in order to implement "computed go to" operations, using the BIM, as before.

The PC is loaded either with PC+1 or with a branch address (for instructions such as branches, calls, or interrupts) to start a new fetch cycle. In the case of conditional branches where the branch is not taken, the PC is incremented once more beyond the location of the branch address, i.e., PC+2. The processor also has a repeat instruction feature which allows the execution of the next single instruction N+1 times, where N is defined by loading an 8-bit repeat counter RPTC. If this repeat feature is used, the instruction is executed, and the RPTC is decremented until the RPTC goes to zero. This feature is useful with many instructions, such as NORM (normalize contents of accumulator). MACD (multiply and accumulate with data move), and SUBC (conditional subtract).

### SYSTEM CONTROL AND INTERFACE

System control operations are provided on the processor chip by an on-chip timer, a repeat counter, external and internal interrupts, and an external reset signal.

The memory-mapped 16-bit timer used for external control operations is a down counter that is continuously clocked by an internal clock. This clock is derived by dividing the CLKOUTI frequency by four. Reset sets the timer to its maximum value (FFFF) but does not initialize the period register PRD. Upon release of reset, the timer begins decrementing. Following this, the timer or the period register PRD may be reloaded under program control by an instruction.

A timer interrupt TINT is generated every time the timer decrements to zero. The timer is reloaded with the value contained in the period register PRD within the same cycle that it reaches zero so that interrupts may be programmed to occur at regular intervals of 4x(PRD) CLKOUTI cycles. This feature is useful for synchronously sampling or writing to peripherals. The timer register TIM and period register PRD may be accessed at any time by an instruction. A period register value of zero is not allowed. If the timer is not used, the timer interrupt should be masked or all maskable interrupts disabled by a DINT instruction.

A repeat feature allows a single instruction to be performed up to 256 times. The repeat counter RPTC is loaded with either a data memory value (via an RPT instruction) or an immediate value (RPTK instruction). The value of this operand is one less than the number of times that the next instruction is executed. The repeat feature can be used with instructions such as multiply/accumulates, block moves, I/O transfers, and table read/writes. Those instructions that are normally multicycle are pipelined when using the repeat feature, and effectively become single-cycle instructions. For example, the table read instruction ordinarily takes three cycles, but when repeated, a table location can be read every cycle due to the overlap.

The processor chip has three external maskable user interrupts, INT2-INT0, available for external devices that interrupt the processor. Internal interrupts are generated by the serial port (RINT and XINT), by the timer (TINT), and by the software interrupt (TRAP) instruction. Interrupts are prioritized with reset having the highest priority and the serial port transmit interrupt having the lowest priority. All interrupt locations in the memory map are on two-word boundaries so that branch instructions can be accommodated in those locations if desired. Control circuitry protects multicycle instructions from interrupts; if an interrupt occurs during a multicycle instruction, the interrupt is not processed until the instruction is completed. This mechanism applies both to instructions that are repeated or become multicycle due to the READY signal.

The use of the RS signal on the control bus asynchronously causes the processor to terminate execution and forces the program counter PC to zero. For system operation upon powerup, a reset (RS) signal must be asserted for at least five clock cycles to guarantee a reset of the device. Processor execution begins at location O, of the map of Fig. 7b, which normally contains a branch instruction to direct program execution to the system initialization routine.

The data, program, and I/O address spaces of Fig. 7b provide interface to memory and I/O. The local memory interface consists of: a 16-bit parallel data bus D; a 16-bit address bus RA; data, program, and I/O space select (DA, PS, and IS) signals; and other system control signals. The R/W signal controls the direction of the transfer, and STRB provides a timing signal to control the transfer. I/O design is simplified by having I/O treated the same way as memory. I/O devices are mapped into the I/O address space using the processor's external address and data buses in the same manner as memory-mapped devices, but using the select signals. Interface to memory and I/O devices of varying speeds is accomplished by using the READY line. When transactions are made with slower devices, the processor waits until the other device completes its function and signals the processor via the READY line. Then, the processor chip continues execution.

A serial port provides communication with serial devices, such as codecs, serial A/D converters, and other serial systems, with a minimum of external hardware. The serial port may also be used for intercommunication between processors in multiprocessing applications. The serial port has the following two memory-mapped registers: the data transmit register DXR; and the date receive register DRR. Since these registers are memory-mapped, they may be accessed in the same manner as any other data memory location. Both the DRR and DXR registers have shift registers associated with them that define the bit to be received or transmitted (starting with the MSB). An external clock CLKX is coupled to the DXR, and a mode bit TXM determines whether the framing pulse (FSX) is generated on-chip or comes from off-chip. The DRR has a serial-port clock CLKR and an FSR pulse coupled to it. The serial port operates in either the byte mode or 16-bit word mode.

The flexibility of this architecture allows configurations to satisfy a wide range of system requirements, including systems where the processor chip is: a standalone processor; a multiprocessor with devices in parallel; a slave/host multiprocessor with global memory space; or a peripheral processor interfaced via processor-controlled signals to another device. The various multiprocessing configurations are described below.

For multiprocessing applications, the processor chip has the capability of allocating global data memory space and communicating with that space via the BR (bus request) and READY control signals. Global memory is data memory shared by more than one processor. Global data memory access must be arbitrated. The 8-bit memory-mapped memory allocation register GREG specifies part of the data memory space as global external memory. The contents of the register GREG determine the size of the global memory space. If the current instruction addresses an operand within that space, bus request BR is asserted to request control of the bus. The length of the memory cycle is controlled by the READY line.

The processor supports DMA (direct memory access) to its external program/data memory using the HOLD and HOLDA signals. Another processor can take complete control of the external memory by asserting HOLD low causing the processor to tristate its address, data, and control lines.

### Memory Management

The structure of the memory map of Fig. 4b is programmable and can vary for each task of the processor. Instructions are provided for moving blocks of external data memory or program memory into data memory, configuring a block of on-chip data RAM as program memory, and defining part of external data memory as global. Examples of moving, configuring, and manipulating memory will be briefly described.

Since the processor directly addresses two areas of 64K memory, blocks of data or program code can be stored off-chip in slow memories and then loaded on-chip for faster execution. The BLKD and BLKP instructions facilitate memory-to-memory block moves on the processor TMS32020. THE BLKD instruction moves a block within data memory, usually be preceding it with a RPTK instruction containing a number such as 255 to move 256 words.

The configurability of on-chip RAM and the large amount of external memory simplify the downpleading of data or program memory into the chip 10. Also, since data in the RAM 15 is preserved when redefining on-chip RAM, RAM 15P can be configured dynamically for both data and program memory. Figure 4 illustrates the changes in on-chip RAM when switching configurations; in particular, the CONFD and CONFP instructions change the effective address of the RAM 15P, and change its address and data busses. On-chip memory is configured by a reset or by the CNFD and CNFP instructions. RAM 15P is configured as data memory by executing CNFD or reset; or a CNFP instruction configures this block as program memory. For example, program code can be loaded to RAM 15P using BLKD, then a CNFP instruction executed to reconfigure, then code executed from RAM 15P. The first instruction fetch after a CNFP or CNFD instruction is taken from the previous memory configuration; i.e., a CNFP instruction must be placed at external program memory location 65,278 if execution is to begin from the first word of RAM 15P at location 65280 after one more external instruction fetch. If the instruction placed at location 65,279 is a two-word instruction, the second word is then fetched from the first location in RAM 15P. Alternatively, the user may execute from external program memory 12 if all of the on-chip RAM is to be used as data memory. RAM 15 is always mapped into the data memory space. For almost all of the instructions, execution time is the same for programs in on-chip RAM as for programs in external memory operating with no wait states, assuming that the data is in internal RAM. An exception to this is the IN and OUT instructions. When executed from on-chip RAM, these instructions execute in one cycle.

Global memory is memory shared by more than one processor, therefore, access to it must be arbitrated. When using global memory, the processor's address space is divided into local and global sections. The local section is used by the processor to perform its individual function, and the global section is used to communicate with other processors. A memory-mapped register GREG is provided in the processor that allows part of data memory to be specified as global external memory. GREG, which is memory-mapped at data memory address location 5, is an eight-bit register which is connected to the eight LSBs of the internal D-bus. The contents of GREG determine the size of the global memory space. The legal values of GREG and corresponding global memory spaces are shown below:

| | LOCAL MEMORY | | GLOBAL MEMORY | |
|---|---|---|---|---|
| GREG VALUE | RANGE | # WORDS | RANGE | # WORDS |
| 000000XX | 0-65,535 | 65,536 | -------------- | 0 |
| 10000000 | 0-32,767 | 32,768 | 32,768-65,535 | 32,768 |
| 11000000 | 0-49,151 | 49,152 | 49,152-65.535 | 16,384 |
| 11100000 | 0-57,343 | 57,344 | 57,344-65,535. | 8,192 |
| 11110000 | 0-61,439 | 61,440 | 61,440-65,535 | 4,096 |
| 11111000 | 0-63,487 | 63,488 | 63,488-65,535 | 2,048 |
| 11111100 | 0-64,511 | 64,512 | 64,512-65.535 | 1,024 |
| 11111110 | 0-65,023 | 65,024 | 65,024-65,535 | 512 |
| 11111111 | 0-65,279 | 65,280 | 65,280-65,535 | 256 |

If an instruction addresses data in global memory, the BR bus request signal BR on the control bus 13 is asserted to request the use of global memory. Before performing the memory access, the control circuitry checks to see if READY is asserted. When READY is asserted, the global memory access is performed. After completion of the global memory access cycle and if the bus arbitration logic continues to assert READY, the processor performs a global memory access every machine cycle until READY is removed.

## Claims

1. A microcomputer device responsive to instruction words selected from an instruction set and stored within an addressable memory space, said device being formed in a single integrated circuit and having data input and output terminals and address output terminals (RA), the device comprising within said integrated circuit: an arithmetic logic unit (ALU) having a data input and a data output, a control circuit (ID) responsive to said stored instruction words having outputs connected to said arithmetic logic unit, the control circuit generating micro-control signals on said output to cause said arithmetic logic unit to execute instructions represented by the instruction words, a read/write data memory (15) forming part of said memory space and having an address input and data input and output, a program memory (11,14) forming part of said memory space and having an address input and at least a program output, and internal data and address buses (D-Bus,P-Bus) interconnecting said arithmetic logic unit, said control circuit and said memories and coupled to said data input and output terminals and said address output terminals, characterised in that said instruction set includes a move instruction word, and said control circuit (ID) includes a repeat counter (RPTC) and is arranged such that the move instruction is executed by said control circuit a number of times defined by the number stored in said repeat counter which is decremented with each execution of the move instruction, whereby said move instruction word causes the transfer of a block of data in locations starting at a first address of said memory space to locations starting at a second address of said memory space, the number of items of data in said block being defined by the number stored in said repeat counter.

2. A microcomputer device as claimed in claim 1 and wherein said instruction set includes a word (RPTK) causing a number to be stored in said repeat counter.

3. A microcomputer system comprising a microcomputer device according to claim 1 or claim 2, an external read/write memory (11) forming part of said addressable memory space and having an address input and data input and output, an external address bus connected to the address output terminals of the microcomputer device and to the address input of the external memory, and an external data bus connected to the data input and output terminals of the microcomputer device and to the data input and output of the external memory.

## Patentansprüche

1. Mikrocomputervorrichtung, die abhängig von aus einem Befehlssatz ausgewählten und an einem adressierbaren Speicherplatz abgespeicherten Befehlswörtern arbeitet, in einer einzigen integrierten Schaltung gebildet ist, Dateneingangs- und -ausgangsanschlüsse (RA) aufweist und innerhalb der integrierten Schaltung die folgenden Elemente umfaßt: eine Rechen- und Logikeinheit (ALU) mit einem Dateneingang und einem Datenausgang, eine Steuerschaltung (ID), die abhängig von den gespeicherten Befehlswörtern arbeitet und Ausgänge besitzt, die mit der Rechen- und Logikeinheit verbunden sind, wobei die Steuerschaltung an dem Ausgang Mikrosteuersignale erzeugt, die die Rechen- und Logikeinheit veranlassen, Befehle auszuführen, die durch die Befehlswörter repräsentiert werden, einen einen Teil des Speicherplatzes bildenden Lese-/Schreib-Datenspeicher (15) mit einem Adresseneingang sowie einem Dateneingang und einem Datenausgang, einem einen Teil des Speicherplatzes bildenden Programmspeicher (11, 14) mit einem Adresseneingang und wenigstens einem Programmausgang, und internen Daten- und Adressenbussen (D-Bus, P-Bus), die die Rechen- und Logikeinheit, die Steuerschaltung und die Speicher miteinander verbinden und an die Dateneingangs- und Datenausgangsanschlüsse sowie die Adressenausgangsanschlüsse angeschlossen sind; wobei die Vorrichtung dadurch gekennzeichnet ist, daß der Befehlssatz ein Übertragungsbefehlswort enthält, und die Steuerschaltung (ID) einen Wiederholungszähler (RPTC) enthält, der so angelegt ist, daß der Übertragungsbefehl von der Steuerschaltung eine Anzahl von Malen ausgeführt wird, die durch die in dem Wiederholungszähler gespeicherte Zahl definiert ist, die bei jeder Ausführung des Übertragungsbefehls um eins vermindert wird, wodurch das Übertragungsbefehlswort die Übertragung eines Datenblocks, der sich an Stellen befindet, die mit einer ersten Adresse des Speicherplatzes beginnen, zu Stellen veranlaßt, die mit einer zweiten Adresse des Speicherplatzes beginnen, wobei die Anzahl an Datenelementen in dem Block durch die in dem Wiederholungszähler gespeicherte Zahl definiert wird.

2. Mikrocomputervorrichtung nach Anspruch 1, bei der der Befehlssatz ein Wort (RPTK) enthält, das veranlaßt, daß eine Zahl in dem Wiederholungszähler gespeichert wird.

3. Mikrocomputersystem mit einer Mikrocomputervorrichtung nach Anspruch 1 oder Anspruch 2, einem externen, einen Teil des adressierbaren Speicherplatzes bildenden Lese-/Schreibspeicher (11), der einen Adresseneingang sowie einen Dateneingang und einen Datenausgang aufweist, einem externen Adressenbus, der mit den Adressenausgangsanschlüssen der Mikrocomputervorrichtung und dem Adresseneingang des externen Speichers verbunden ist, und einem externen Datenbus, der mit den Dateneingangs- und -ausgangsanschlüssen der Mikrocomputervorrichtung und dem Dateneingang und -ausgang des externen Speichers verbunden ist.

## Revendications

1. Dispositif de micro-ordinateur répondant à des mots d'instruction sélectionnés à partir d'un jeu d'instructions et stockés dans un espace de mémoire adressable, ledit dispositif étant formé dans un circuit intégré unique et ayant des bornes d'entrée et de sortie de données et des bornes de sortie d'adresse (RA), le dispositif comprenant à l'intérieur dudit circuit intégré : une unité arithmétique et logique (ALU) ayant une entrée de données et une sortie de données, un circuit de commande (ID) répondant auxdits mots d'instruction stockés ayant des sorties reliées à ladite unité arithmétique et logique, le circuit de commande produisant des signaux de micro-commande sur ladite sortie de manière à amener ladite unité arithmétique et logique à exécuter les instructions représentées par les mots d'instruction, une mémoire de données à lecture/écriture (15) constituant une partie dudit espace mémoire et ayant une entrée d'adresse et une entrée et une sortie de données, une mémoire de programme (11, 14) formant une partie dudit espace mémoire et ayant une entrée d'adresse et au moins une sortie de programme, et des bus de données et d'adresse internes (D-bus, P-bus) interconnectant ladite unité arithmétique et logique, ledit circuit de commande et lesdites mémoires et reliés aux bornes d'entrée et de sortie de données et aux bornes de sortie d'adresse, caractérisé en ce que ledit jeu d'instructions comporte un mot d'instruction 'déplacer' et ledit circuit de commande (ID) comprend un compteur de répétitions (RPTC) et est conçu de telle manière que l'instruction 'déplacer' est exécutée par ledit circuit de commande un nombre de fois défini par le nombre stocké dans ledit compteur de répétition qui est décrémenté à chaque exécution de l'instruction 'déplacer', ce qui fait que ledit mot d'instruction 'déplacer' provoque le transfert d'un bloc de données dans des emplacements commençant au niveau d'une première adresse dudit espace mémoire jusqu'à des emplacements commençant au niveau d'une deuxième adresse dudit espace mémoire, le nombre d'éléments de données dans ledit bloc étant défini par le nombre stocké dans ledit compteur de répétition.

2. Dispositif de micro-ordinateur selon la revendication 1, caractérisé en ce que ledit jeu d'instructions comporte un mot (RPTK) provoquant le stockage d'un nombre dans ledit compteur de répétition.

3. Système de micro-ordinateur comprenant un dispositif de micro-ordinateur selon la revendication 1 ou la revendication 2, une mémoire de lecture/écriture (11) formant partie dudit espace mémoire adressable et possédant une entrée d'adresse et une entrée et une sortie de données, un bus d'adresse externe relié aux bornes de sortie d'adresse du dispositif de micro-ordinateur et à l'entrée d'adresse de la mémoire externe, et un bus de données externe relié aux bornes d'entrée et de sortie de données du dispositif de micro-ordinateur et aux entrée et sortie de données de la mémoire externe.
